# EUROPEAN PATENT APPLICATION

(11) **EP 3 582 232 A1**
(43) Date of publication of application: **18.12.2019**
(21) Application number: 18750871.8
(22) Date of filing: 05.02.2018
(51) Int. Cl.: G21F 9/00, G21F 9/06, G21F 9/28

(54) **METHOD FOR REDUCING AMOUNT OF RADIOACTIVITY OF LIQUID BODY**

(30) Priority: 09.02.2017 JP 2017022119
(71) Applicant: Mizuno, Minoru, Tokyo 157-0073 (JP)
(72) Inventor: Mizuno, Minoru, Tokyo 157-0073 (JP)
(74) Representative: Becker Kurig Straus
(86) International application number: PCT/JP2018/003863
(87) International publication number: WO 2018/147238

(57) **Abstract**

According to the present invention, a method which dissolves hydrogen in a liquid body that contains a radioactive substance is able to reduce the amount of radioactivity of the liquid body. With respect to this method, the radioactive substance may contain radioactive cesium, and hydrogen may be dissolved in the liquid body by mixing a substance that contains a radioactive substance with a hydrogen water that contains 1.0 ppm or more of hydrogen.

## Description

### BACKGROUND OF THE INVENTION

### 1. Field of Invention

The present invention relates to a method for reducing the amount of radioactivity of liquid.

### 2. Description of Related Art

Hydrogen-contained water (also referred to as "hydrogen water" in this specification) has a high reducing power, and therefore has been attempted to be suitable for various uses. For example, Patent Document 1 discloses a radioactivity decontamination device comprising a hydrogen supply unit that supplies a hydrogen gas, a hydrogen water production unit that dissolves the hydrogen gas in a raw material water to produce a hydrogen water, and a spray unit that sprays the produced hydrogen water as a water flow. According to the device, it is possible to efficiently remove (decontaminate) radioactive substances attached to soil or the like.

### Related Document

### Patent Document

Patent Document 1: Japanese Patent Application Laid-Open No. 2015-78836

### SUMMARY OF THE INVENTION

### Problem to be solved

However, according to the results described in the embodiments of Patent Document 1, by taking soil as a sample, the difference between the case where decontamination is performed using a tap water and the case where decontamination is performed using a hydrogen water is not necessarily clear, and it is shown that even if the hydrogen water is used, it is not easy to remove radioactive substances, especially radioactive cesium such as cesium 137 and cesium 134, from the soil.

An object of the present invention is to provide technical solutions that are applied for use in applications other than the removal of radioactive substances from soil to solve problems associated with radioactivity contamination.

### Solutions to solve problem

One embodiment of the present invention provides a method for reducing an amount of radioactivity of a liquid including a radioactive substance. The method is characterized by dissolving hydrogen in the liquid. As described above, radioactive cesium strongly binds to substances constituting soil, so even if a hydrogen water having a high reducing power is used, it is not easy to separate the radioactive cesium from the soil. However, from a result of the study by the present inventors, it is found that compared with a liquid that dissolves radioactive cesium, does not actively dissolve hydrogen and uses water as a medium, a hydrogen water in a state where radioactive cesium is dissolved, that is, a liquid that dissolves radioactive cesium used as a radioactive substance, actively dissolves hydrogen and uses water as a medium can significantly reduce the amount of radioactive rays within a short time. The reason is not clear, but when a radioactive substance such as radioactive cesium decays, it is possible to accelerate the decay by the presence of hydrogen in the vicinity.

For example, radioactive rays (beta rays or gamma rays) generated when the radioactive cesium in the hydrogen water decays interact with hydrogen in the hydrogen water, whereby hydrogen molecules may be ionized. Due to the influence of hydrogen bonds generated by ions of the hydrogen molecules, the radioactive cesium (cesium hydroxide, etc.) dissolved in an aqueous solution may be easily aggregated. The radioactive cesium is easily affected by the aggregation of the radioactive cesium that is uniformly dissolved in the aqueous solution. Specifically, gamma rays generated by decay of a part of the aggregated radioactive cesium easily collide with other radioactive cesium. As a result, photonuclear reactions of the radioactive cesium are prone to occur, facilitating the conversion of the radioactive cesium (e.g., cesium 137) to a non-radioactive substance (e.g., barium 136). Thus, the dissolved hydrogen in the aqueous solution promotes aggregation of the radioactive cesium, and the amount of radioactive rays of the aqueous solution may be reduced within a short time.

From the viewpoint of stably obtaining the action due to the presence of hydrogen, hydrogen may also be dissolved in the liquid by mixing a substance that includes the radioactive substance with a hydrogen water that includes 1.0 ppm or more of hydrogen. Alternatively, for example, hydrogen may also be dissolved in the liquid by supplying hydrogen to the liquid that includes the radioactive substance in a tap water in a pressurized state.

When the radioactive substance is radioactive cesium, particularly when at least one of cesium 137 and cesium 134 is included, the promotion of decay by hydrogen can be remarkably confirmed.

### Effects

According to the present invention, a method may be provided, which reduces the amount of radioactivity of a liquid that includes a radioactive substance by applying a hydrogen water as one of problems associated with radioactivity contamination.

### DESCRIPTION OF the EMBODIMENTS

Hereinafter, the effects of the present invention will be described by way of embodiments and comparative examples.

### (Embodiment)

A cleaning liquid was sprayed onto a concrete slab to which a radioactive substance including radioactive cesium are attached, and the radioactive substance was dissolved in the cleaning liquid. The surface contamination density of the concrete slab was measured, and an average value of 5 measuring points was 3734 cpm. The cleaning liquid was water (hydrogen water) with dissolved hydrogen of about 1.3 ppm. The cleaning liquid was used in an amount of 120 L. Time required to spray the cleaning liquid was 1 hour.

The cleaning liquid after cleaning was recovered for 1 hour. The surface contamination density of the concrete slab from which the cleaning liquid was recovered was measured, and an average value of 5 measuring points was 2068 cpm. Therefore, the decontamination rate (unit: %, [surface contamination density before cleaning - surface contamination density after cleaning]/surface contamination density before cleaning × 100) was 45%.

After 22 hours from the completion of the recovery operation, the radioactivity of the recovered cleaning liquid was measured and found to be 32640 Bq (Becquerel). Since the recovery amount was 120 L, the radioactivity concentration of the recovered liquid was 272 Bq/L.

### (Comparative Example)

As a cleaning liquid, 12 L of 3% hydrogen peroxide water was sprayed onto a concrete slab, and then 250 L of tap water flowed through and was recovered. Except that, cleaning was carried out in the same manner as in the embodiments. Regarding the surface contamination density of the concrete slab before spraying the cleaning liquid, an average value of 5 measuring points was 4218 cpm. Time required to spray the cleaning liquid was 1 hour, and recovery time was 1 hour.

The surface contamination density of the concrete slab from which the cleaning liquid and the tap water were recovered was measured, and an average value of 5 measuring points was 2406 cpm. Therefore, the decontamination rate was 43%.

After 24 hours from the completion of the recovery operation, the radioactivity of the recovered cleaning liquid was measured and found to be 225300 Bq. Since the recovery amount was 250 L, the radioactivity concentration of the recovered liquid was 901 Bq/L.

According to the above embodiments and comparative examples, it can be confirmed that the hydrogen water and the hydrogen peroxide water have the same ability to remove radioactive substances from the concrete slab, but regarding the recovered cleaning liquid, compared with the case of using the hydrogen peroxide water, the case of using the hydrogen water as the cleaning liquid significantly reduces the radioactivity concentration within a short time.

## Claims

1. A method for reducing an amount of radioactivity of a liquid including a radioactive substance, the method comprising:
dissolving hydrogen in the liquid.

2. The method according to claim 1, wherein the hydrogen is dissolved in the liquid by mixing a substance that includes the radioactive substance with a hydrogen water that includes 1.0 ppm or more of hydrogen.

3. The method according to claim 1 or 2, wherein the radioactive substance includes radioactive cesium.
